# EUROPEAN PATENT SPECIFICATION

(11) **EP 3 875 840 B1**
(45) Date of publication and mention of the grant of the patent: **29.06.2022**
(21) Application number: 20160625.8
(22) Date of filing: 03.03.2020
(51) Int. Cl.: F21K 9/61, F21V 33/00, F21V 29/70, F21S 9/02, F21V 3/02, F21V 23/06, F21V 8/00, F21V 21/005, F21S 2/00

(54) **INDEPENDENT AND SPLICEABLE CABINET LAMP**
UNABHÄNGIGE UND SPLEISSBARE SCHRANKLAMPE
LAMPE D'ARMOIRE INDÉPENDANTE ET ÉPISSURABLE

(43) Date of publication of application: 08.09.2021
(73) Proprietor: Prosperous (Ningbo) Lighting Appliance Co., Ltd., Ningbo, Zhejiang 315100 (CN)
(72) Inventor: Yu, Xiangjun, Ningbo, Zhejiang 315100 (CN); Yuan, Liu, Ningbo, Zhejiang 315100 (CN)
(74) Representative: Ipey

(56) References cited:
- EP-A1- 2 589 853
- US-A1- 2009 010 022
- US-A1- 2011 205 758
- US-A1- 2015 036 387

## Description

### TECHNICAL FIELD

The present invention relates to the technical field of cabinet lamps, in particular, to an independent and spliceable cabinet lamp.

### BACKGROUND

Cabinet lamps are mainly used for local lighting and decoration of cabinets. Based on the original simple quartz lamps (spotlights), after years of development, each part of the cabinet has a special lighting lamp. At the same time, a fluorescent lamp light source has been developed based on an original halogen lamp light source, and then today's LED light source is implemented. The needs for safety, energy conservation and environmental protection are really met. The cabinet lamps are mainly made of aluminium alloy and PC plastic. At present, cabinet lamps on the market are usually poor in attractiveness and low in brightness. The cabinet lamps only have the effect of downward illumination and cannot achieve diffused all-around illumination. In addition, the front cover plate cannot be separated during mounting and dismounting. A cabinet lamp according to the prior art is disclosed in the document US 2009/010022 A1.

### SUMMARY

In view of the current situation of the prior art, the present invention provides an independent and spliceable cabinet lamp to solve the problems in the background art. The technical solution adopted by the present invention for solving the foregoing technical problems is as follows:
an independent and spliceable cabinet lamp, including a front cover plate, a lampshade, an LED lamp assembly, a light guide plate, a heat dissipation plate and a back plate, where three sides of an edge of the lampshade are convex to form a groove shape; the front cover plate is detachably mounted at an upper end of an outer side of the lampshade; the LED lamp assembly, the light guide plate, the heat dissipation plate and the back plate are mounted in the lampshade with the three sides of the edge convex to form the groove shape; and the LED lamp assembly emits light to the outside on all sides by the lampshade under the action of the light guide plate.

Further, the LED lamp assembly is mounted at an upper end of an inner side of the lampshade, the light guide plate is mounted on the inner side of the lampshade and corresponds to the LED lamp assembly, the heat dissipation plate is mounted on a rear side of the light guide plate, and the back plate is located on a rear side of the heat dissipation plate and fixedly mounted on the lampshade. Therefore, the LED lamp assembly, the light guide plate, the heat dissipation plate, the back plate, the front cover plate and the lampshade are mounted to form the integral independent and spliceable cabinet lamp.

Further, the LED lamp assembly includes a circuit board, a lamp panel and LED lamp beads, the circuit board is electrically connected to the lamp panel, and the LED lamp beads are evenly mounted on the lamp panel and are electrically connected with the lamp panel. Therefore, a light source is provided by arranging the LED lamp assembly.

Further, the circuit board is further provided with battery connectors and a power supply terminal, the battery connectors are electrically connected to and installed at two ends of the circuit board respectively, and the power supply terminal is electrically connected to and installed in the middle of the circuit board. Therefore, the battery connectors can be connected through an insertion piece, so that single independent and spliceable cabinet lamps can be spliced and electrically connected, and power can be supplied to the single independent and spliceable cabinet lamp by arranging the power supply terminal.

Further, the lampshade is further provided with two notches, and the two notches correspond to the battery connectors respectively. Therefore, the insertion piece can correspond to the battery connector through the two notches so that the single independent and spliceable cabinet lamps can be spliced and electrically connected.

Further, a surface layer of the light guide plate which clings to the lampshade is provided with frosted particles. Therefore, the emitted light is soft and uniform.

Further, an inner side wall of the front cover plate is provided with a magnet, and the magnet passes through the lampshade and is adsorbed to the back plate. Therefore, the front cover plate is detachably mounted at the upper end of the outer side of the lampshade.

Compared with the prior art, the present invention has the following advantages.

The present invention provides an independent and spliceable cabinet lamp, which includes a front cover plate, a lampshade, an LED lamp assembly, a light guide plate, a heat dissipation plate and a back plate, where three sides of an edge of the lampshade are convex to form a groove shape; and the LED lamp assembly emits light to the outside on all sides by the lampshade under the action of the light guide plate. The independent and spliceable cabinet lamp is attractive and higher in brightness. The emitted light is soft and uniform by arranging the light guide plate and arranging the frosted particles on the light guide plate. In addition, the three sides of the edge of the lampshade are convex to form the groove shape, the LED lamp assembly emits light to the outside on all sides by the lampshade under the action of the light guide plate, and at the same time, the inner side of the front cover plate is provided with the magnet to adsorb the back plate, so that the front cover plate is detachable during mounting and dismounting, which is convenient and fast.

### BRIEF DESCRIPTION OF DRAWINGS

Figure 1 is an exploded drawing of the present invention;
Figure 2 is an exploded drawing of the present invention; and
Figure 3 is a specific use and mounting drawing of the present invention.

### DESCRIPTION OF EMBODIMENTS

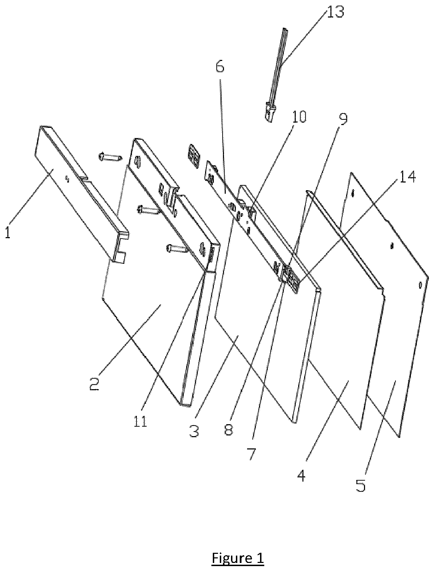

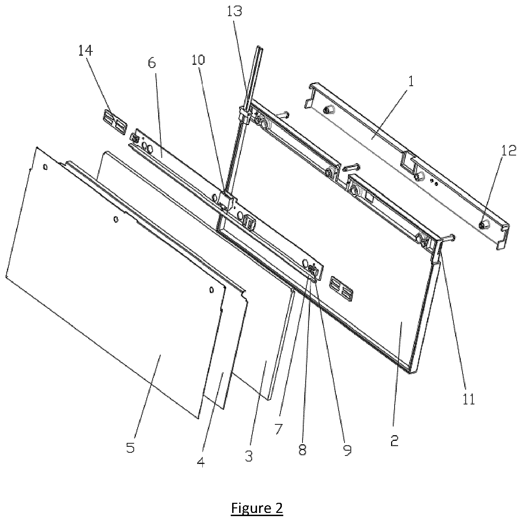

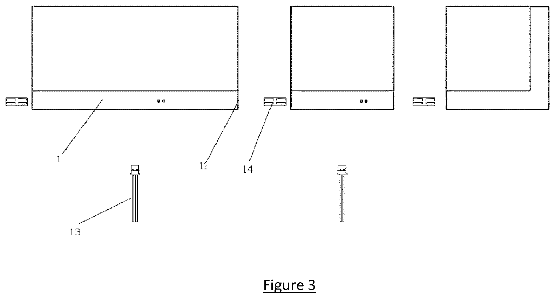

As shown in Figures 1-3, an independent and spliceable cabinet lamp includes a front cover plate 1, a lampshade 2, an LED lamp assembly, a light guide plate 3, a heat dissipation plate 4 and a back plate 5, where three sides of an edge of the lampshade 2 are convex to form a groove shape; the front cover plate 1 is detachably mounted at an upper end of an outer side of the lampshade 2; the LED lamp assembly, the light guide plate 3, the heat dissipation plate 4 and the back plate 5 are mounted in the lampshade 2 with the three sides of the edge convex to form the groove shape; and the LED lamp assembly emits light to the outside all around by the lampshade 2 under the action of the light guide plate 3. The LED lamp assembly is mounted at an upper end of an inner side of the lampshade 2, the light guide plate 3 is mounted on the inner side of the lampshade 2 and corresponds to the LED lamp assembly, the heat dissipation plate 4 is mounted on a rear side of the light guide plate 3, and the back plate 5 is located on a rear side of the heat dissipation plate 4 and fixedly mounted on the lampshade 2. The LED lamp assembly includes a circuit board 6, a lamp panel 7 and LED lamp beads 8, the circuit board 6 is electrically connected to the lamp panel 7, and the LED lamp beads 8 are evenly mounted on the lamp panel 7 and are electrically connected with the lamp panel 7. The circuit board 6 is further provided with battery connectors 9 and a power supply terminal 10, the battery connectors 9 are electrically connected to and installed at two ends of the circuit board 6 respectively, and the power supply terminal 10 is electrically connected to and installed in the middle of the circuit board 6. The lampshade 2 is further provided with two notches 11, and the two notches 11 correspond to the battery connectors 9 respectively. A surface layer of the light guide plate 3 which clings to the lampshade 2 is provided with frosted particles. An inner side wall of the front cover plate 1 is provided with a magnet 12, and the magnet 12 passes through the lampshade 2 and is adsorbed to the back plate 5.

When in specific mounting and use, the light guide plate 3, the heat dissipation plate 4 and the back plate 5 are sequentially mounted from bottom to top inside the lampshade 2. The LED lamp assembly is embedded in an upper portion inside the lampshade 2, and the LED lamp beads 8 evenly disposed on the LED lamp assembly correspond to the light guide plate 3. The battery connectors 9 at both ends of the circuit board 6 correspond to the two notches 11 on the lampshade 2 respectively, and then the back plate 5 is fixed on the lampshade 2 through a screw. Finally the front cover plate 1 is adsorbed on the back plate 5 through the adsorption effect of the magnet 12. After the single independent and spliceable cabinet lamp is implemented, the insertion pieces 14 correspond to the two notches 11 of the independent and spliceable cabinet lamp and the battery connectors 9 are connected. As a result, the single independent and spliceable cabinet lamps are connected and electrified. The front cover plate 1 is adsorbed on the back plate 5 under the adsorption effect of the magnet 12, so that the mounting is convenient and fast. In addition, the power supply terminal 10 can also supply power to the single independent and spliceable cabinet lamp through a power cable 13. The independent and spliceable cabinet lamp is attractive and higher in brightness. The emitted light is soft and uniform by arranging the light guide plate 3 and arranging the frosted particles on the light guide plate 3. In addition, the three sides of the edge of the lampshade 2 are convex to form the groove shape, the LED lamp assembly emits light to the outside on all sides by the lampshade 2 under the action of the light guide plate 3, and at the same time, the inner side of the front cover plate 1 is provided with the magnet 12 to adsorb the back plate 5, so that the front cover plate 1 is detachable during mounting and dismounting, which is convenient and fast.

Finally, it should be noted that the foregoing embodiments are only used to explain the technical solutions of the present invention, and are not intended to limit the same. Although the present invention is described in detail with reference to the foregoing embodiments, those skilled in the art should understand that they can still modify the technical solutions described in the foregoing embodiments, or make equivalent substitutions on some technical features therein. These modifications or substitutions do not make the essence of the corresponding technical solutions deviate from the scope of the technical solutions of the embodiments of the present invention.

## Claims

1. An independent and spliceable cabinet lamp, comprising a front cover plate (1), a lampshade (2), an LED lamp assembly, a light guide plate (3), a heat dissipation plate (4) and a back plate (5), wherein three sides of an edge of the lampshade (2) are convex to form a groove shape; the LED lamp assembly, the light guide plate (3), the heat dissipation plate (4) and the back plate (5) are mounted in the lampshade (2) with the three sides of the edge convex to form the groove shape; a **characterized in that** the front cover plate (1) is detachably mounted at an upper end of an outer side of the lampshade (2), and **in that** the LED lamp assembly emits light to the outside all around by the lampshade (2) under the action of the light guide plate (3).

2. The independent and spliceable cabinet lamp according to claim 1, wherein the LED lamp assembly is mounted at an upper end of an inner side of the lampshade (2), the light guide plate (3) is mounted on the inner side of the lampshade (2) and corresponds to the LED lamp assembly, the heat dissipation plate (4) is mounted on a rear side of the light guide plate (3), and the back plate (5) is located on a rear side of the heat dissipation plate (4) and fixedly mounted on the lampshade (2).

3. The independent and spliceable cabinet lamp according to claim 2, wherein the LED lamp assembly comprises a circuit board (6), a lamp panel (7) and LED lamp beads (8), the circuit board (6) is electrically connected to the lamp panel (7), and the LED lamp beads (8) are evenly mounted on the lamp panel (7) and are electrically connected with the lamp panel (7).

4. The independent and spliceable cabinet lamp according to claim 3, wherein the circuit board (6) is further provided with battery connectors (9) and a power supply terminal (10), the battery connectors (9) are electrically connected to and installed at two ends of the circuit board (6) respectively, and the power supply terminal (10) is electrically connected to and installed in the middle of the circuit board (6).

5. The independent and spliceable cabinet lamp according to claim 4, wherein the lampshade (2) is further provided with two notches (11), and the two notches (11) correspond to the battery connectors (9) respectively.

6. The independent and spliceable cabinet lamp according to claim 5, wherein a surface layer of the light guide plate (3) which clings to the lampshade (2) is provided with frosted particles.

7. The independent and spliceable cabinet lamp according to claim 6, wherein an inner side wall of the front cover plate (1) is provided with a magnet (12), and the magnet (12) passes through the lampshade (2) and is adsorbed to the back plate (5).

## Patentansprüche

1. Unabhängig montierbare Schranklampe, umfassend eine Frontabdeckplatte (1), einen Lampenschirm (2), eine LED-Lampenanordnung, eine Lichtleitplatte (3), eine Wärmeableitungsplatte (4) und eine Rückplatte (5), **dadurch gekennzeichnet, dass** eine Rillenform durch einen dreiseitigen Vorsprung an der Kante des Lampenschirms (2) gebildet wird, wobei die Frontabdeckplatte (1) getrennt an einem oberen Ende der Außenseite des Lampenschirms (2) installiert ist, wobei die LED-Lampenanordnung, die Lichtleitplatte (3), die Wärmeableitungsplatte (4) und die Rückplatte (5) in einem rillenförmigen Lampenschirm (2) installiert sind, der durch den dreiseitigen Vorsprung an der Kante gebildet wird, wobei die LED-Lampenanordnung unter Einwirkung der Lichtleitplatte (3) allseitig Licht aus dem Lampenschirm (2) abgibt.

2. Unabhängig montierbare Schranklampe nach Anspruch 1, **dadurch gekennzeichnet, dass** die LED-Lampenanordnung an einem oberen Ende der Innenseite des Lampenschirms (2) installiert ist, wobei die Lichtleitplatte (3) an der Innenseite des Lampenschirms (2) installiert ist und der LED-Lampenanordnung entspricht, wobei die Wärmeableitungsplatte (4) auf der Rückseite der Lichtleitplatte (3) installiert ist, wobei sich die Rückplatte (5) auf der Rückseite der Wärmeableitungsplatte (4) befindet und fest an dem Lampenschirm (2) installiert ist.

3. Unabhängig montierbare Schranklampe nach Anspruch 2, **dadurch gekennzeichnet, dass** die LED-Lampenanordnung eine Leiterplatte (6), eine Lampenplatte (7) und eine LED-Lampenkugel (8) umfasst, wobei die Leiterplatte (6) elektrisch mit der Lampenplatte (7) verbunden ist, wobei die LED-Lampenkugel (8) gleichmäßig an der Lampenplatte (7) installiert ist und elektrisch mit der Lampenplatte (7) verbunden ist.

4. Unabhängig montierbare Schranklampe nach Anspruch 3, **dadurch gekennzeichnet, dass** die Leiterplatte (6) auch mit einem Batterieverbinder (9) und einem Stromversorgungsanschluss (10) versehen ist, wobei der Batterieverbinder (9) elektrisch an beiden Enden der Leiterplatte (6) installiert ist, wobei der Stromversorgungsanschluss (10) elektrisch verbunden und in der Mitte der Leiterplatte (6) installiert ist.

5. Unabhängig montierbare Schranklampe nach Anspruch 4, **dadurch gekennzeichnet, dass** der Lampenschirm (2) auch mit zwei Kerben (11) versehen ist, wobei die beiden Kerben (11) jeweils dem Batterieverbinder (9) entsprechen.

6. Unabhängig montierbare Schranklampe nach Anspruch 5, **dadurch gekennzeichnet, dass** die Lichtleitplatte (3) mit mattierten Partikeln in der Nähe der Oberflächenschicht des Lampenschirms (2) versehen ist.

7. Unabhängig montierbare Schranklampe nach Anspruch 6, **dadurch gekennzeichnet, dass** die innere Seitenwand der Frontabdeckplatte (1) mit einem Magneten (12) versehen ist, wobei der Magnet (12) durch den Lampenschirm (2) verläuft und an der Rückplatte (5) adsorbiert ist.

## Revendications

1. Lampe de placard de cuisine à épissure indépendante, **caractérisée en ce qu'**elle comprend une plaque de couverture avant (1), un abat-jour (2), un composant de lampe à LED, une plaque de guidage de lumière (3), une plaque radiatrice (4) et une plaque arrière (5), l'abat-jour (2) ayant des bords relevés sur trois côtés de sorte de former une forme de rainure, la plaque de couverture avant (1) étant montée de manière démontable sur l'extrémité supérieure extérieure de l'abat-jour (2), le composant de lampe à LED, la plaque de guidage de lumière (3), la plaque radiatrice (4) et la plaque arrière (5) étant montés dans l'abat-jour (2) dont les bords sont relevés sur trois côtés de sorte de former une forme de rainure, et le composant de lampe à LED émettant des lumières sur tous les côtés extérieurs à travers l'abat-jour (2) sous l'action de la plaque de guidage de lumière (3).

2. Lampe de placard de cuisine à épissure indépendante selon la revendication 1, **caractérisée en ce que** le composant de lampe à LED est monté à l'extrémité supérieure intérieure de l'abat-jour (2), la plaque de guidage de lumière (3) est montée au côté intérieur de l'abat-jour (2) et correspond au composant de lampe à LED, la plaque radiatrice (4) est montée au côté arrière de la plaque de guidage de lumière (3) et la plaque arrière (5) est disposée au côté arrière de la plaque radiatrice (4) et est monté de manière fixe sur l'abat-jour (2).

3. Lampe de placard de cuisine à épissure indépendante selon la revendication 2, **caractérisée en ce que** le composant de lampe à LED comprend une carte de circuit imprimé (6), une plaque d'éclairage (7) et des perles de lampe à LED (8), la carte de circuit imprimé (6) étant connectée électriquement à la plaque d'éclairage (7), et les perles de lampe à DEL (8) étant montées de manière uniforme sur la plaque d'éclairage (7) et connectées électriquement à la plaque d'éclairage (7).

4. Lampe de placard de cuisine à épissure indépendante selon la revendication 3, **caractérisée en ce que** la carte de circuit imprimé (6) est pourvue en outre des connecteurs de batterie (9) et des bornes d'alimentation (10), les connecteurs de batterie (9) étant électriquement connectés et montés respectivement à deux extrémités de la carte de circuit imprimé (6), et les bornes d'alimentation (10) étant connectées électriquement et montées au milieu de la carte de circuit imprimé (6).

5. Lampe de placard de cuisine à épissure indépendante selon la revendication 4, **caractérisée en ce que** l'abat-jour (2) est pourvu en outre de deux encoches (11), les deux encoches (11) correspondant respectivement aux connecteurs de batterie (9).

6. Lampe de placard de cuisine à épissure indépendante selon la revendication 5, **caractérisée en ce que** la plaque de guidage de lumière (3) est pourvue sur sa couche superficielle adhérant étroitement à l'abat-jour (2) de particules givrées.

7. Lampe de placard de cuisine à épissure indépendante selon la revendication 6, **caractérisée en ce que** la plaque de couverture avant (1) est pourvue sur sa paroi latérale intérieure d'un aimant (12), l'aimant (12) pénétrant à travers l'abat-jour (2) et étant adhéré sur la plaque arrière (5).
